# EUROPÄISCHE PATENTSCHRIFT

(11) **EP 0 953 162 B1**
(45) Veröffentlichungstag und Bekanntmachung des Hinweises auf die Patenterteilung: **16.05.2001**
(21) Anmeldenummer: 98904106.6
(22) Anmeldetag: 20.01.1998
(51) Int. Cl.: G02B 6/50

(54) **LICHTWELLENLEITERKABELNETZ**
FIBRE-OPTIC CABLE NETWORK
RESEAU DE CABLES A FIBRES OPTIQUES

(30) Priorität: 20.01.1997 DE 19701787
(43) Veröffentlichungstag der Anmeldung: 03.11.1999
(73) Patentinhaber: Manstorfer, Karl, 93309 Kelheim (DE); Hecht, Reinhard, 93167 Falkenstein (DE)
(72) Erfinder: HECHT, Martin, D-93167 Falkenstein (DE)
(74) Vertreter: Tetzner, Michael, Dipl.-Ing.
(86) Internationale Anmeldenummer: EP9800295
(87) Internationale Veröffentlichungsnummer: WO9832043

(56) Entgegenhaltungen:
- EP-A- 0 158 416
- EP-A- 0 708 287
- DE-U- 29 700 912
- GB-A- 2 124 728
- PATENT ABSTRACTS OF JAPAN vol. 018, no. 051 (M-1548), 26.Januar 1994 & JP 05 272664 A (NIPPON STEEL WELD PROD & ENG CO LTD;OTHERS: 01), 19.Oktober 1993, in der Anmeldung erwähnt

## Beschreibung

Die Erfindung betrifft ein Lichtwellenleiterkabelnetz gemäß dem Oberbegriff des Anspruches 1.

Lichtwellenleiterkabelnetze sind insbesondere hinsichtlich Übertragungsrate und Übertragungsqualität den herkömmlichen Kommunikationsnetzen auf Kupferbasis überlegen. Man ist daher bestrebt, die Lichtwellenleiter-Infrastruktur für Orts-, Regional- und Weitverkehrsverbindungen weiter auszubauen. Es wird ferner die stufenweise Integration von Lichtwellenleitern in bestehende Kupfer-Telekommunikationsnetze und die Anspeisung von Breitbandkabelnetzen für den Dienst des Kabelfernsehens angestrebt. Ferner ist eine wesentlich breitbandigere Versorgung und damit zukunftsweisende Ertüchtigung der Breitbandkabelnetze für die Ausstattung mit zusätzlichen, neuen Diensten sowie die Integration von nachrichtentechnisch genutzten Energieversorgungsnetzen in Kommunikationsnetzen kostengünstig wünschenswert.

Zum Ausbau des Lichtwellenleiterkabelnetzes werden derzeit Straßen, Gehwege bzw. sonstiges Gelände aufgegraben, um die Kabel entweder direkt oder in sogenannten Kabelzugrohren zu verlegen. Diese Art der Verlegung ist jedoch sehr zeit- und kostenaufwendig und ist nur bei frostfreiem Boden möglich.

Um Grabarbeiten zu vermeiden, können auch sogenannte Luftkabel verlegt werden. Diese Technik kommt insbesondere bei der Stromversorgung im Weitverkehrsbereich zum Einsatz. In Orts- und Regionalnetzen zur Versorgung der Teilnehmer werden die Luftkabel jedoch wegen verschiedener Nachteile kaum mehr angewandt.

Neuerdings wird ferner ein Kabelverlegeverfahren erprobt, bei welchem in die Straße oder den Gehweg eine Nut eingefräst, anschließend das Lichtwellenleiterkabel eingebracht und die Öffnung mit einer Füllmasse vergossen wird. Die mechanische Beschädigung der Straße oder des Gehweges ist zwar wesentlich geringer als beim Kabelverlegen mittels Aufgraben, eine bleibende Beeinträchtigung bzw. Wertminderung der Verkehrswege ist jedoch auch hier gegeben.

In der DE-A-42 03 718 wird vorgeschlagen, die Lichtwellenleiterkabel in begehbaren Wasser-, insbesondere Regenwasser-Kanälen zu verlegen und an den Kanaldecken oder an den Wänden von Gully- oder Einstiegsschächten Übergänge zu anderen Kabelnetzteilen vorzusehen. Zum Anschluß an andere Netze sind Grabarbeiten erforderlich.

Aus der JP-A-5 272 664 ist ein Befestigungselement bekannt, mit dem Glasfaserkabel in Abwasserkanälen gehaltert werden können. Dieses bekannte Befestigungselement ist vor der Anbringung im Kanal etwa hufeisenförmig vorgespannt und wird in dieser Form durch ein Verbindungsgestänge gehalten. Das Befestigungselement wird mit dem Kabel verbunden und in den Abwasserkanal eingebracht. Sobald alle Befestigungsvorrichtungen über die gesamte Länge in den Abwasserkanal eingebracht worden sind, werden die jeweiligen Verbindungsgestänge, die untereinander mit einem Draht verbunden sind, herausgerissen, wobei sich das Befestigungselement an die Wandung des Kanals andrückt. Dieses Verfahren zum Verlegen von Kabeln in Abwasserkanälen hat jedoch den Nachteil, daß beim Herausreißen der Gestänge die Befestigungselemente verrutschen können und dadurch eine optimale Ausrichtung des Kabels, beispielsweise an der Oberseite des Kanals, nicht mehr gewährleistet ist. Ferner ist diese Art der Anbringung der Kabel relativ aufwendig.

Der Erfindung liegt daher die Aufgabe zugrunde, ein Lichtwellenleiterkabelnetz gemäß dem Oberbegriff des Anspruches 1 zu schaffen, wodurch die Lichtwellenleiter-Infrastruktur auf einfache, schnelle und kostengünstige Weise sehr flexibel und betriebssicher zu jeder Jahreszeit bis in die Gebäude ausgebaut werden kann.

Diese Aufgabe wird das kennzeichnende Merkmal des Anspruches 1 gelöst.

Weitere Ausgestaltungen der Erfindung sind Gegenstand der Unteransprüche.

Erfindungsgemäß werden die Mittel zur Befestigung durch einen federnd vorgespannten, geschlossenen Edelstahlring gebildet, der sich an die Wandung des Kanal- und Rohrsystems andrückt.

Durch die Verwendung von bereits vorhandenen, nicht begehbaren Kanal- bzw. Rohrsystemen, wie beispielsweise das Abwassersystem oder Gasrohranlagen, können die Lichtwellenleiterkabel auf einfache Weise bis in die einzelnen Gebäude verlegt werden. Das Verlegen erfolgt mit Hilfe eines fernsteuerbaren Kanalroboters, der die Kabel in die Kanal- und Rohrsysteme einbringt und an den Wandungen befestigt, wobei er die Befestigungselemente einem mitgeführten Magazin entnimmt.

Ein besonders flexibles Lichtwellenleiterkabelnetz ergibt sich dann, wenn das einzelne Lichtwellenleiterkabel ein äußeres Metallschutzröhrchen aufweist, in dem die Lichtwellenleiterfasern enthalten sind, wobei eine Vielzahl derartiger Lichtwellenleiterkabel nebeneinander und flach an den Wandungen des Kanal- oder Rohrsystems befestigt sind. Die Kabelanlage muß so ausgeführt sein, daß weder durch Nagetiere noch durch Säuberungsund Revisionsarbeiten oder durch laugen- bzw. säurehaltige Abwässer Schäden an ihr verursacht werden.

Weitere Ausgestaltungen der Erfindung werden anhand einiger Ausführungsbeispiele und der Zeichnung näher beschrieben.

In der Zeichnung zeigen
- Fig.1: eine schematische Querschnittsdarstellung mit einem ersten Befestigungselement,
- Fig.2: eine schematische Längsschnittdarstellung des Befestigungselementes gemäß Fig.1,
- Fig.3: eine schematische Querschnittsdarstellung mit einem zweiten Befestigungselement,
- Fig.4: eine schematische Querschnittsdarstellung mit einem dritten Befestigungselement,
- Fig. 5: eine schematische Querschnittsdarstellung mit einem vierten Befestigungselement,
- Fig. 6: eine schematische Darstellung eines Kanalroboters,
- Fig.7: eine schematische Darstellung eines Flachbandkabels,
- Fig.8: eine schematische Darstellung des Lichtwellenleiters im Bereich des Austritts aus dem Kanal- oder Rohrsystem.

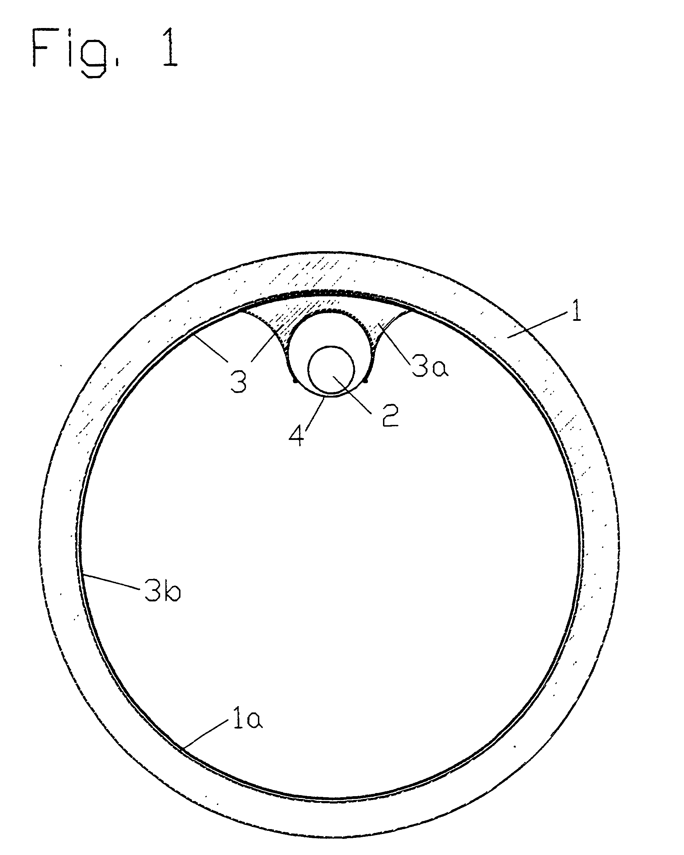

Fig.1 zeigt einen Querschnitt eines Rohres 1, das beispielsweise als Abwasserrohr eines Kanal- oder Rohrsystems genutzt wird. An einer Wandung la dieses Rohres 1 ist ein Lichtwellenleiterkabel 2 mit Hilfe eines Befestigungselementes 3 gehalten.

Das Lichtwellenleiterkabel 2 wird in einem nicht begehbaren Kanal- oder Rohrsystem verlegt. Der Innendurchmesser des Rohres 1 beträgt hierbei insbesondere weniger als 1 m.

Die Verlegung des Lichtwellenleiterkabelnetzes in derartigen Rohren erfolgt mit Hilfe eines fernsteuerbaren Kanalroboters, der das Lichtwellenleiterkabel in das Rohr einbringt und befestigt. Der Kanalroboter kann aber auch effizient in begehbaren Rohren eingesetzt werden.

Gerade bei nicht begehbaren Kanal- oder Rohrsystemen werden an die Art der Befestigung und an deren Lage innerhalb des Rohres besondere Anforderungen gestellt.

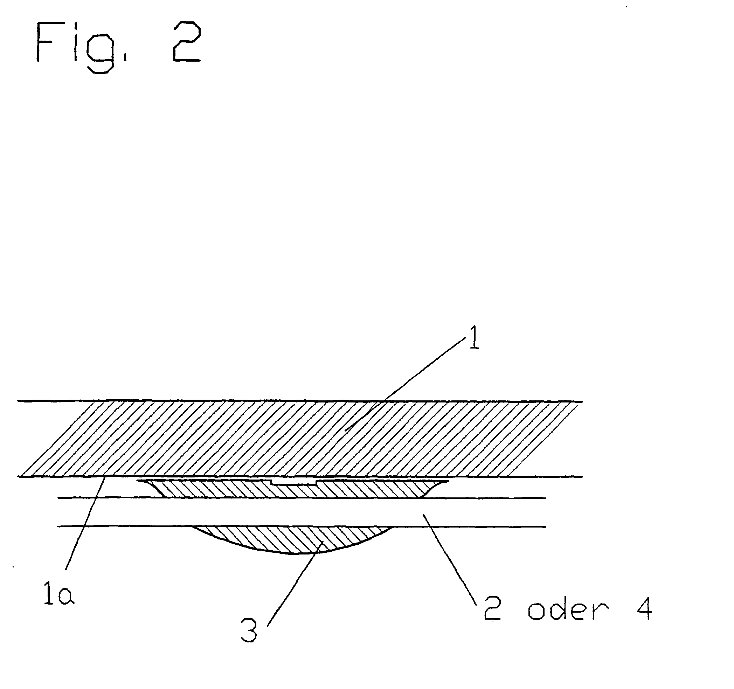

Die Befestigung des Lichtwellenleiterkabels erfolgt üblicherweise in der Art, daß die primäre Nutzung des Kanal- oder Rohrsystems möglichst geringfügig beeinträchtigt wird. Zudem darf die Befestigung nicht zu einer Beschädigung oder längerfristig entstehenden Beeinträchtigung des Systems führen. Nachdem es nicht immer zu vermeiden sein wird, daß die, beispielsweise, durch das Rohr strömenden Abwässer mit dem Lichtwellenleiterkabel und den Befestigungselementen in Kontakt kommen, werden die Befestigungselemente strömungstechnisch günstig geformt, wie das insbesondere aus der Längsschnittdarstellung gemäß Fig.2 hervorgeht. Die Befestigungselemente 3 sollen insbesondere so ausgestaltet sein, daß mit den Abwässern mitgeführte Schmutzpartikel sich nicht an den Befestigungselementen festsetzen können.

Die Befestigungselemente 3 bestehen einerseits aus Mitteln 3a zur Aufnahme wenigstens eines Lichtwellenleiterkabels 2 und Mitteln 3b zur Befestigung an der Wandung 1a des Rohres 1.

Die Befestigungsmittel 3b des Befestigungselementes 3 werden durch einen federnd vorgespannten, geschlossenen Edelstahlring gebildet, der sich an die Wandung la des Rohres 1 andrückt.

Die Mittel 3a zur Aufnahme des Lichtwellenleiterkabels werden beispielsweise als Schnappklemmen ausgebildet. Die Aufnahmemittel 3a und die Befestigungsmittel 3b können sowohl einstückig als auch als separate Teilelemente ausgebildet sein. Im letzteren Fall müßte eine geeignete Verbindungsmöglichkeit vorgesehen werden.

Im dargestellten Ausführungsbeispiel wird das Lichtwellenleiterkabel in einem Kabelrohr 4 geführt, das das Lichtwellenleiterkabel vor Schäden durch Nagetiere, durch Säuberungs- und Revisionsarbeiten oder durch laugen- bzw. säurehaltige Abwässer schützt. Das Kabelrohr 4 kann beispielsweise als flexibles Kabelzugrohr ausgebildet sein, in welchem das Lichtwellenleiterkabel nach bekannten Verfahren verlegt wird.

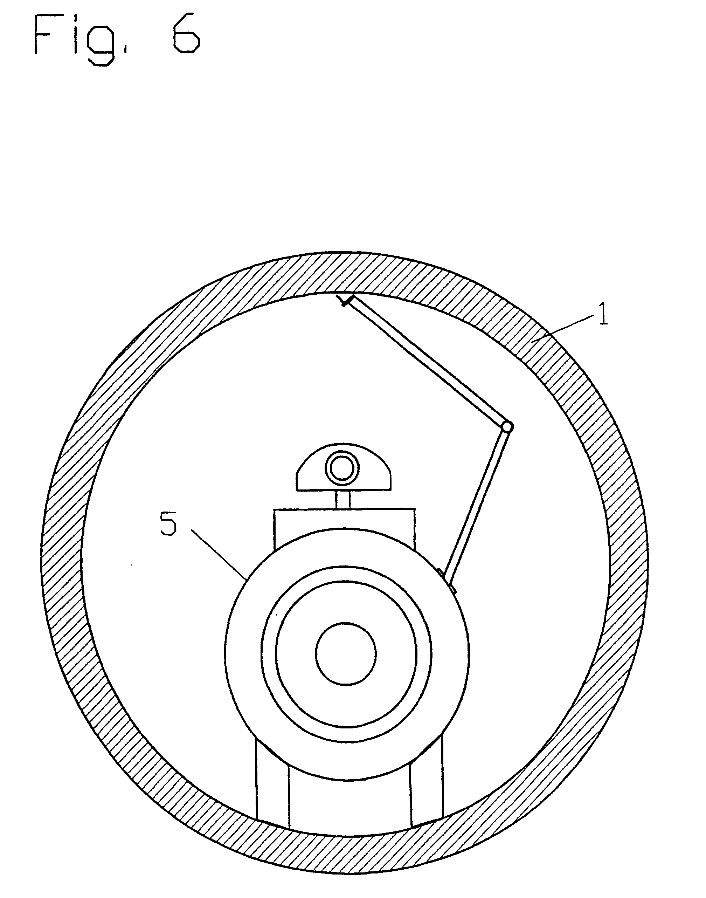

Die Verlegung des Lichtwellenleiterkabels und dessen Befestigung erfolgt mit einem fernsteuerbaren Kanalroboter 5, wie er in Fig.6 schematisch dargestellt ist.

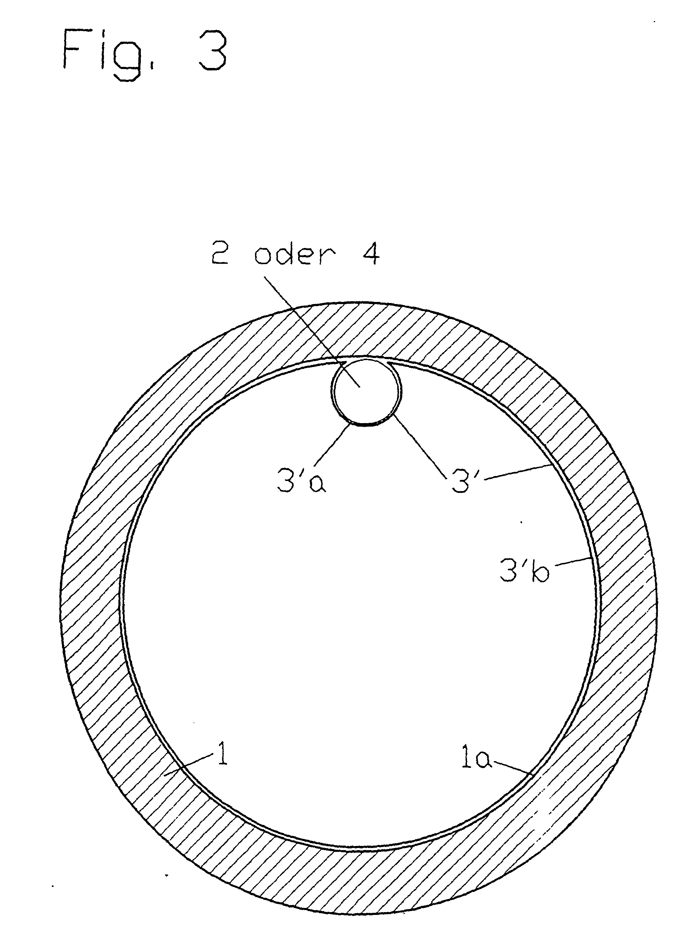

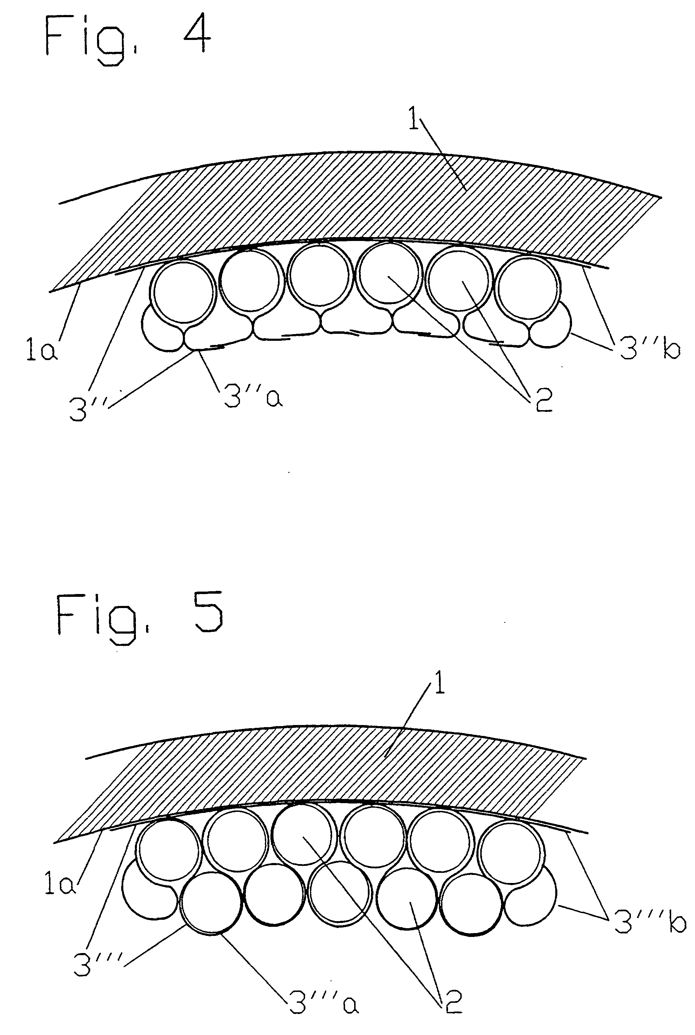

Fig.3 zeigt ein zweites Ausführungsbeispiel eines Befestigungselementes 3', dessen Befestigungsmittel 3'b ebenfalls als geschlossener Edelstahlring ausgebildet ist, der einstückig in die Aufnahmemittel 3'a übergeht. Im Bereich der Aufnahmemittel 3'a weist der geschlossene Edelstahlring, der beispielsweise aus nicht rostendem Federstahlband besteht, eine runde Einbuchtung auf, die das Lichtwellenleiterkabel 2 aufnimmt, welches im Minimalfall wie beschrieben aus nur einem Metallröhrchen mit den Fasern im Inneren besteht. Das Lichtwellenleiterkabel 2 ist auch hier beispielsweise von einem Kabelrohr 4 umgeben.

Das Lichtwellenleiterkabel 2 wird gemäß Fig.3 zwischen der Wandung la des Rohres 1 und die Befestigungselemente 3' fixiert.

Fig.4 zeigt ein Befestigungselement 3'' mit Mitteln 3''a zur Aufnahme einer Vielzahl von Lichtwellenleiterkabeln 2, wobei das Befestigungselement flach ausgebildet ist und sich die Lichtwellenleiterkabel nebeneinander flach an der Wandung la des Rohres 1 anschmiegen. Die Aufnahmemittel 3''a werden beispielsweise durch ein mäanderförmig verlaufendes, einzelne Kammern bildendes, nicht rostendes Stahlband gebildet, in die die Lichtwellenleiter vom Kanalroboter eingeschnappt werden. Das Aufnahmeelement 3''a wird an der Rohrwandung wiederum mittels eines geschlossenen Edelstahlrings gehalten.

Die flache Bauform ist insbesondere bei nicht begehbaren Kanal- und Rohrsystemen wichtig, um die dadurch gebildeten Hindernisse möglichst klein zu halten.

In Fig.5 ist eine Variante zum Mehrfachkabelsystem gemäß Fig.4 dargestellt, wobei wiederum eine Vielzahl von Lichtwellenleitern nebeneinander in einer ersten Schicht an der Wandung la angeordnet sind. Über dieser ersten Schicht ist versetzt eine zweite Schicht von Lichtwellenleiterkabeln aufgesetzt. Die Befestigungsmittel 3'''a werden wiederum durch ein meanderförmig verlaufendes, aneinandergereihte Kammern bildendes Edelstahlband gebildet.

Die herkömmliche Lichtwellenleiterkabel bestehen aus einer Vielzahl von einzelnen Faserbündeln, die von einem Kabelmantel umgeben werden. Derartige Lichtwellenleiterkabel sind insbesondere für den Regional- bzw. Weitverkehrsbereich geeignet. Sollen jedoch Lichtwellenleiter zu einzelnen Haushalten bzw. Teilnehmern verlegt werden, so sind diese herkömmlichen Lichtwellenleiterkabel zu groß dimensioniert und nicht flexibel genug handhabbar.

Vorzugsweise verwendet man ein Lichtwellenleiterkabel, das aus einem Faserbündel besteht, das von einem Schutzmantel umgeben ist. Der Durchmesser dieses Lichtwellenleiterkabels beträgt im Normalfall weniger als 15 mm, vorzugsweise 3 bis 5 mm. Als Schutzmantel kommt insbesondere ein metallischer Mantel in Frage, da er auch einen ausreichenden Nagetierschutz gewährleisten würde.

Eine Vielzahl dieser Lichtwellenleiterkabel können beispielsweise in Befestigungselementen gemäß Fig.4 oder 5 nebeneinander in einem Kanal- oder Rohrsystem gehalten werden. Die vielen kleinen Lichtwellenleiterkabel gewährleisten eine sehr hohe Anwendungsflexibilität. Durch die so erreichbare maximale Verzweigungsmöglichkeit des Lichtwellenleiternetzes können alle Kabelanschlußformen realisiert werden.

Als Schutzmantel für diese kleinen Lichtwellenleiterkabel bieten sich insbesondere Edelstahlröhrchen oder Röhrchen aus anderen Metallen oder Legierungen an. Durch den kleinen Durchmesser dieser Lichtwellenleiterkabel wird insbesondere auch die Verlegung in Rohren mit wenigen Zentimetern Durchmesser ermöglicht.

Sofern bei den Mehrfachkabelsystemen nicht alle Klammern mit Kabeln belegt werden, können die verbleibenden Hohlräume durch Stöpsel verschlossen werden, um sie vor Verschmutzungen zu schützen. Die Stöpsel werden vor dem Einbringen weiterer Kabel durch den Kanalroboter entfernt.

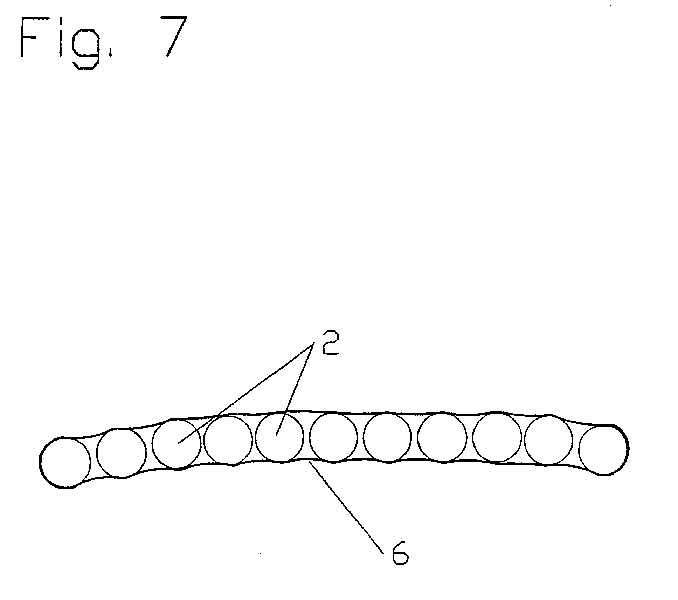

Eine weitere Kabelausführung ist in Fig.7 dargestellt, bei der ein oder mehrere der Lichtwellenleiter wiederum in einem metallischen Schutzmantel integriert und mehrere solcher zu einem Flachbandkabel zusammengefügt sind. Das Kabel trägt durch seine flache Konstruktion kaum auf und ermöglicht eine sehr einfache Verlegung im Kanal- oder Rohrsystem.

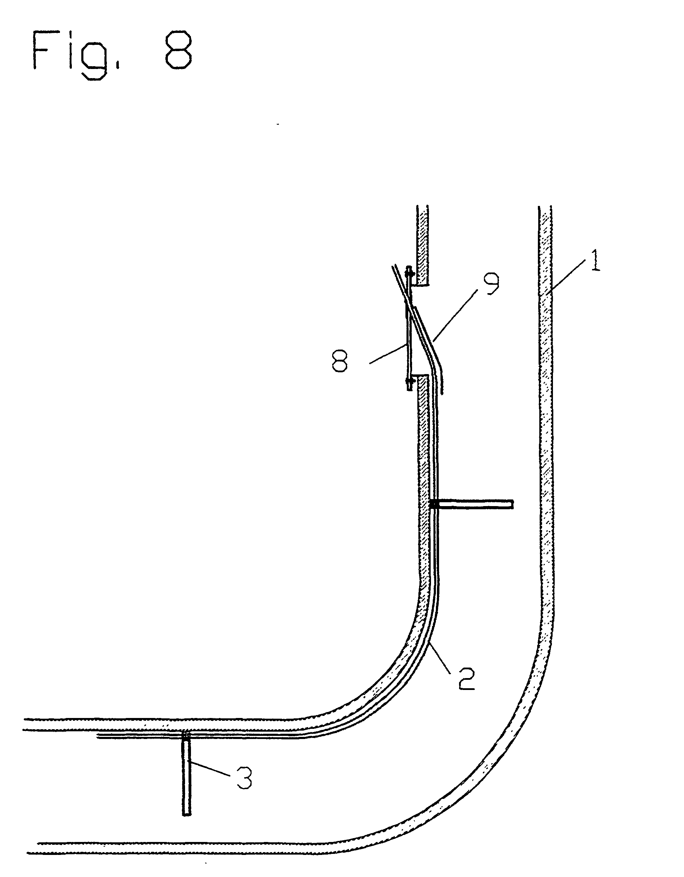

Das Lichtwellenleiterkabel wird beispielsweise an einem sogenannten Kanalputzstück aus dem Kanalsystem herausgeführt, siehe Fig.8. Zu diesem Zweck wird das Kanalputzstück mit einem besonderen Deckel 8 versehen, der eine Durchführung des Lichtwellenleiterkabels vorsieht, ohne Beeinflussung des Lichtwellenleiterkabels abgenommen werden kann und auch durch die Revisionsöffnung die Reinigung der Rohranlage ohne Einschränkungen möglich bleibt. Die Durchführung wird dabei zweckmäßigerweise so ausgestaltet, daß das Kabel schräg und stark gegen den Deckel geneigt durchgeführt wird, so daß das Kabel nur geringfügig gebogen werden muß. Der Bereich der Durchführung wird zusätzlich durch eine Abdeckhaube 9 gegen Schmutzablagerungen geschützt. Die Durchführungsstelle ist selbstverständlich wasser- und luftdicht ausgestaltet. Im Rahmen der Erfindung sind auch andere Austrittsstellen denkbar, beispielsweise im Bereich von Regenrohren. Sollte die Rohranlage des Teilnehmers keine brauchbare Möglichkeit zum Austritt des Kabels bieten, so können schließlich auch die letzten Meter zum Teilnehmer außerhalb der Rohranlage verlegt werden, wobei nur geringe Grabarbeiten anfallen oder durch eine übliche Preßvorrichtung eine unterirdische Verbindung zum bzw. vom Kanal- oder Rohrsystem herzustellen ist.

Die Verlegung und Montage des Lichtwellenleiterkabelnetzes durch den Kanalroboter erfolgt im wesentlichen wie folgt:

Der Roboter, welcher mit einer oder mehreren Kameras ausgestattet ist, bewegt sich auf Rädern oder Ketten in die Rohranlage (Fig.6). Über Fernbedienung können die Fahrt und die verschiedenen Werkzeuge beeinflußt werden. Die Lichtwellenleiterkabel können an den Roboter angehängt und bereits beim ersten oder aber bei weiteren Befahrungen der Rohranlage in diese eingebracht werden.

Der Roboter entnimmt die vorgefertigten Befestigungsmittel aus einem mitgeführten Magazin und setzt sie in das Rohr ein. Die Aufnahmemittel für die Lichtwellenleiterkabel können entweder bereits an den Befestigungsmitteln angebracht sein oder erst in einem weiteren Arbeitsgang vom Roboter an diesen befestigt werden.

Das Magazin kann auch so ausgestaltet sein, daß es ein zu einer Spule aufgewickeltes Federstahlband enthält, von welcher durch den Kanalroboter die Edelstahlringe in der für die Rohranlage erforderlichen Länge abgetrennt werden können. Dies hat den Vorteil, daß nicht für unterschiedliche Rohrdurchmesser unterschiedliche Edelstahlringe vorrätig gehalten und verarbeitet werden müssen, was zu günstigeren Montagezeiten und Ausführungskosten führt.

## Patentansprüche

1. Lichtwellenleiterkabelnetz, mit wenigstens einem Lichtwellenleiterkabel (2) und Befestigungselementen (3; 3'; 3''; 3'''), mit denen das Lichtwellenleiterkabel an der Wandung von nicht begehbaren Kanaloder Rohrsystemen angebracht ist, wobei die Befestigungselemente Mittel (3a, 3'a, 3''a, 3'''a) zur Aufnahme wenigstens eines Lichtwellenleiterkabels und Mittel (3, 3'b, 3''b) zur Befestigung an der Wandung des Kanal- oder Rohrsystems aufweisen,
dadurch gekennzeichnet, daß die Mittel zur Befestigung durch einen federnd vorgespannten, geschlossenen Edelstahlring gebildet werden, der sich an die Wandung des Kanal- oder Rohrsystems andrückt.

2. Lichtwellenleiterkabelnetz nach Anspruch 1, dadurch gekennzeichnet, daß die Befestigungselemente strömungstechnisch günstig geformt sind.

3. Lichtwellenleiterkabelnetz nach Anspruch 1, dadurch gekennzeichnet, daß das Befestigungselement (3b; 3'; 3''b) Mittel (3'a; 3''a; 3'''a) zur Aufnahme einer Vielzahl von Lichtwellenleiterkabeln (2) aufweist, wobei das Befestigungselement derart ausgebildet ist, daß sich die Lichtwellenleiterkabel nebeneinander und flach an der Wandung (1a) des Kanal- oder Rohrsystems anschmiegen.

4. Lichtwellenleiterkabelnetz nach Anspruch 1, dadurch gekennzeichnet, daß die Mittel (3a, 3'a, 3''a, 3'''a) zur Aufnahme eines Lichtwellenleiterkabels als Schnappklemmen ausgebildet sind.

5. Lichtwellenleiterkabelnetz nach Anspruch 1, dadurch gekennzeichnet, daß das Lichtwellenleiterkabel (2) ein metallisches Röhrchen aufweist, in dem Lichtwellenleiterfasern angeordnet sind.

6. Lichtwellenleiterkabelnetz nach Anspruch 5, dadurch gekennzeichnet, daß das Röhrchen einen Durchmesser von weniger als 15 mm aufweist.

7. Lichtwellenleiterkabelnetz nach Anspruch 1, dadurch gekennzeichnet, daß das Lichtwellenleiterkabelnetz in einem Abwasserkanal geführt wird und im Bereich eines Kanalputzstücks (8) aus dem Kanal- oder Rohrsystem herausgeführt wird.

8. Lichtwellenleiterkabelnetz nach Anspruch 1, dadurch gekennzeichnet, daß das Lichtwellenleiterkabel (2) in einem Kabelrohr (4) an der Wandung (1a) des Kanal- oder Rohrsystems befestigt ist.

9. Lichtwellenleiterkabelnetz nach Anspruch 1, dadurch gekennzeichnet, daß zur Befestigung der Lichtwellenleiterkabel (2) das Befestigungselement (3') derart ausgebildet ist, daß das Lichtwellenleiterkabel (2) zwischen der Wandung (1a) des Kanal- oder Rohrsystems und dem Befestigungselement fixiert ist.

10. Lichtwellenleiterkabelnetz nach Anspruch 3, dadurch gekennzeichnet, daß die Lichtwellenleiterkabel (2) ein äußeres Metallröhrchen mit guten Biegeeigenschaften verbunden mit einer guten Stabilität und einem Durchmesser von weniger als 15 mm aufweisen, in dem Lichtwellenleiterfasern angeordnet sind.

## Claims

1. Fibre-optic cable network, having at least one fibre-optic cable (2) and fastening elements (3; 3'; 3"; 3"'), by means of which the fibre-optic cable is attached to the wall of inaccessible duct or pipe systems, the fastening elements having means (3a, 3'a, 3"a, 3"'a) for receiving at least one fibre-optic cable and means (3, 3'b, 3"b) for fastening to the wall of the duct or pipe system, characterised in that the means for fastening are formed by a resiliently pretensioned, closed stainless steel ring which is pressed against the wall of the duct or pipe system.

2. Fibre-optic cable network according to claim 1, characterised in that the fastening elements are shaped favourably in fluid technology terms.

3. Fibre-optic cable network according to claim 1, characterised in that the fastening element (3b; 3'b; 3"b) has means (3'a; 3"a; 3"'a) for receiving a multiplicity of fibre-optic cables (2), the fastening element being of such a form that the fibre-optic cables lie beside each other and flat against the wall (1a) of the duct or pipe system.

4. Fibre-optic cable network according to claim 1, characterised in that the means (3a, 3'a, 3"a, 3"'a) for receiving a fibre-optic cable are in the form of snap-on clips.

5. Fibre-optic cable network according to claim 1, characterised in that the fibre-optic cable (2) has a small metal tube in which fibre-optic cable fibres are arranged.

6. Fibre-optic cable network according to claim 5, characterised in that the tube has a diameter of less than 15 mm.

7. Fibre-optic cable network according to claim 1, characterised in that the fibre-optic cable network is guided in a waste water duct and is guided out of the duct or pipe system in the region of a duct cleaning portion (8).

8. Fibre-optic cable network according to claim 1, characterised in that the fibre-optic cable (2) in a cable duct (4) is fastened to the wall (1a) of the duct or pipe system.

9. Fibre-optic cable network according to claim 1, characterised in that, in order to fasten the fibre-optic cable (2), the fastening element (3') is of such a form that the fibre-optic cable (2) is fixed between the wall (1a) of the duct or pipe system and the fastening element.

10. Fibre-optic cable network according to claim 3, characterised in that the fibre-optic cables (2) have an outer metal tube which has good bending properties in conjunction with good stability and a diameter of less than 15 mm and in which fibre-optic cable fibres are arranged.

## Revendications

1. Réseau de câbles à guides d'ondes lumineuses, comportant au moins un câble (2) à guides d'ondes lumineuses et des éléments de fixation (3;3';3";3" '), à l'aide desquels le câble à guides d'ondes lumineuses est monté sur la paroi de systèmes de conduits ou de tubes, dans lesquels on ne peut pas circuler, les éléments de fixation comportant des moyens (3a,3'a,3"a,3"'a) servant à loger au moins un câble à guides d'ondes lumineuses et des moyens (3,3'b,3"b) pour la fixation sur la paroi du système de conduits ou de tubes,
caractérisé en ce que les moyens de fixation sont formés par une bague fermée en acier spécial, qui est précontrainte élastiquement et s'applique contre la paroi du système de conduits ou de tubes.

2. Réseau de câbles à guides d'ondes lumineuses selon la revendication 1, caractérisé en ce que les éléments de fixation sont agencés d'une manière appropriée du point de vue de la technique des écoulements.

3. Réseau de câbles à guides d'ondes lumineuses selon la revendication 1, caractérisé en ce que l'élément de fixation (3b;3';3"b) comporte des moyens (3'a;3"a;3" 'a) servant à loger une multiplicité de câbles (2) à guides d'ondes lumineuses, l'élément de fixation étant agencé de telle sorte que les câbles à guides d'ondes lumineuses sont disposés les uns à côté des autres et s'appliquent à plat contre la paroi (1a) du système de conduits ou de tubes.

4. Réseau de câbles à guides d'ondes lumineuses selon la revendication 1, caractérisé en ce que les moyens (3a,3'a,3"a,3" 'a) sont agencés sous la forme de pinces encliquetables pour la réception d'un câble à guides d'ondes lumineuses.

5. Réseau de câbles à guides d'ondes lumineuses selon la revendication 1, caractérisé en ce que le câble (2) à guides d'ondes lumineuses comporte un petit tube métallique, dans lequel sont disposées des fibres formant guides d'ondes lumineuses.

6. Réseau de câbles à guides d'ondes lumineuses selon la revendication 5, caractérisé en ce que le petit tube possède un diamètre inférieur à 15 mm.

7. Réseau de câbles à guides d'ondes lumineuses selon la revendication 1, caractérisé en ce que le réseau de câbles à guides d'ondes lumineuses est guidé dans un conduit d'eaux usées et ressort, au niveau d'un élément (8) de fermeture du conduit, hors du système de conduits ou de tubes.

8. Réseau de câbles à guides d'ondes lumineuses selon la revendication 1, caractérisé en ce que le câble (2) à guides d'ondes lumineuses est fixé dans un tube à câbles (4) contre la paroi (1a) du système de conduits ou de tubes.

9. Réseau de câbles à guides d'ondes lumineuses selon la revendication 1, caractérisé en ce que pour la fixation du câble (2) à guides d'ondes lumineuses, l'élément de fixation (3') est agencé de telle sorte que le câble (2) à guides d'ondes lumineuses est fixé entre la paroi (1a) du système de conduit ou de tube et l'élément de fixation.

10. Réseau de câbles à guides d'ondes lumineuses selon la revendication 3, caractérisé en ce que les câbles (2) à guides d'ondes lumineuses comportent un petit tube métallique extérieur possédant de bonnes caractéristiques de flexion en association avec une bonne stabilité et un diamètre inférieur à 15 mm et dans lequel sont logées des fibres optiques.
